# EUROPÄISCHE PATENTSCHRIFT

(11) **EP 4 037 966 B1**
(45) Veröffentlichungstag und Bekanntmachung des Hinweises auf die Patenterteilung: **22.04.2026**
(21) Anmeldenummer: 20799999.6
(22) Anmeldetag: 30.09.2020
(51) Int. Cl.: B64C 39/02, B64D 37/22

(54) **FLUIDTANK ZUR INTEGRATION IN EINE STRUKTUR EINES UNBEMANNTEN FLUGGERÄTS**
FLUID TANK FOR INTEGRATION INTO A STRUCTURE OF AN UNMANNED AIRCRAFT
RÉSERVOIR DE FLUIDE DESTINÉ À ÊTRE INTÉGRÉ DANS UNE STRUCTURE D'UN AÉRONEF SANS PILOTE

(30) Priorität: 30.09.2019 DE 102019126287
(43) Veröffentlichungstag der Anmeldung: 10.08.2022
(73) Patentinhaber: Airbus Defence and Space GmbH, 85521 Ottobrunn (DE)
(72) Erfinder: SANZ LOPEZ, Borja, 82024 Taufkirchen (DE); BRAND, Clemens, 82024 Taufkirchen (DE); JOST, Michael, 82024 Taufkirchen (DE); LOHMILLER, Winfried, 82024 Taufkirchen (DE); SÖLLINGER, Georg, 4676 Aistersheim (AT); GREBNER, Dieter, 4020 Linz (AT); MOTLIK, Oliver, 4820 Bad Ischl (AT)
(74) Vertreter: LKGLOBAL Partnerschaftsgesellschaft mbB
(86) Internationale Anmeldenummer: PCT/DE2020/200082
(87) Internationale Veröffentlichungsnummer: WO 2021/063457

(56) Entgegenhaltungen:
- EP-A1- 3 524 526
- FR-A1- 2 756 255
- FR-A1- 3 071 817
- GB-A- 580 006
- US-A- 1 364 770
- US-A1- 2013 105 628
- US-A1- 2015 210 162

## Beschreibung

### TECHNISCHES GEBIET

Die Erfindung betrifft einen Fluidtank zur Integration in eine Struktur eines unbemannten Fluggeräts sowie ein unbemanntes Fluggerät mit einem derartigen Fluidtank.

### HINTERGRUND DER ERFINDUNG

Unbemannte Fluggeräte können für unterschiedlichste Aufgaben genutzt werden und können hierfür geeignete Bauformen und -größen aufweisen. Es ist etwa bekannt, Überwachungsaufgaben aus großen Flughöhen mit Fluggeräten durchzuführen, die eine große Spannweite, gleichzeitig eine große Flügelstreckung und einen sehr schlanken Rumpf aufweisen. Es ist besonders vorteilhaft, wenn mit der Flughöhe auch lange Flugdauern erreicht werden. Diese können unter anderem durch den Einsatz von Solarzellen als Energielieferant verlängert werden. Es ist bekannt, Solarenergie bei ausreichend Sonneneinstrahlung in eine andere Energieform umzuwandeln und diese an Bord des Fluggeräts zu speichern. Bei Dunkelheit kann die gespeicherte Energie wiederum zum Antrieb des Fluggeräts genutzt werden.

Einen denkbaren Ansatz hierfür bildet das sogenannte regenerative Brennstoffzellensystem. Bei diesem wird Wasser durch solarbetriebene Elektrolyse in Wasserstoff und Sauerstoff zerlegt und an Bord des Fluggeräts in geeigneten Tanks gespeichert. Beim Verbrauch des Wasserstoffs wird Wasser erzeugt, das an Bord gespeichert wird. Hierfür wird beispielsweise ein in der Nähe des Schwerpunkts des Fluggeräts angeordneter Fluidtank verwendet.

Zum kontinuierlichen Durchführen einer Elektrolyse ist es notwendig, einen kontinuierlichen Fluss an Wasser an einen Elektrolyseur zuzuführen. Allerdings ist auch bei unerwarteten Flugbedingungen, die beispielsweise vertikale Böenlasten umfassen, ein kontinuierliches Ausströmen von Wasser erforderlich.

GB 580 006 A zeigt ein Kraftstofftank-System mit einem Hilfstank innerhalb eines Haupttanks, das eine zuverlässige Kraftstoffversorgung auch bei starken Lageänderungen oder Umkehr der Schwerkraft ermöglicht.

US 2015/210162 A1 zeigt ein Tanksystem mit einer inneren und mindestens einer äußeren Kammer, das durch steuerbare Strömungsöffnungen die Lage des Flüssigkeitsschwerpunkts beeinflusst, um eine Überschreitung des Schwerpunktgrenzwerts des Fahrzeugs zu verhindern.

US 1 364 770 A1 zeigt Flugzeuge, insbesondere mit Öltanks, die sowohl als Speicher für Kohlenwasserstoff-Flüssigkeiten als auch als Reservoir für Schmieröl im Motor-Kurbelgehäuse dienen.

FR 2 756 255 A1 zeigt einen Kraftstofftank mit einer Saugöffnung und mindestens einem Einfüllstutzen außerhalb des Tanks. Ein im Inneren des Tanks befestigter Vorratstank steht mit dem Haupttank in Verbindung, sodass Flüssigkeit in den Vorratstank übertreten kann. Die Saugöffnung des Einfüllstutzens mündet in den Vorratstank, dessen Volumen so bemessen ist, dass die Saugöffnung auch bei negativem oder null Lastfaktor oder einer vorgegebenen Kippdauer kontinuierlich mit Flüssigkeit versorgt bleibt.

FR 3 071 817 A1 zeigt eine Drohne mit mindestens einem Elektromotor zur Fortbewegung sowie einer elektrischen Energiequelle in Form einer Brennstoffzelle.

Diese umfasst einen Tank zur Speicherung des Brennstoffs und mindestens eine elementare Zelle mit zwei durch ein Elektrolyt getrennten Elektroden, die elektrochemisch elektrische Energie erzeugen kann.

EP 3 524 526 A1 zeigt ein System mit einem Druckbehälter als Treibstofftank innerhalb des Flugzeugrumpfs, der sich über dessen Großteil erstreckt und dessen Schwerpunkt im Wesentlichen mit dem des Rumpfs übereinstimmt. Der Tank kann entweder eine Teilbelastung des Rumpfs übernehmen oder von dessen Lasten entkoppelt sein. In einigen Ausführungen besteht der Tank aus einem fasergewickelten Druckbehälter.

US 2013/105628 A1 zeigt ein Flugzeugrahmensystem mit zwei Seitenwänden, einer Antriebsplattform zur Aufnahme des Antriebsstrangs und zwei strukturellen Streben, die die Seitenwände parallel zueinander befestigen und eine Kamerahalterung tragen.

### ZUSAMMENFASSUNG DER ERFINDUNG

Es ist eine Aufgabe der Erfindung, einen besonders vorteilhaften Fluidtank zur Integration in eine Struktur eines unbemannten Fluggeräts vorzuschlagen, der eine gewünschte Aufnahmekapazität insbesondere für Wasser besitzt und gleichzeitig eine kontinuierliche Abgabe von Wasser erlaubt, auch bei abrupten Bewegungen des Fluggeräts im Flug.

Die Aufgabe wird durch einen Fluidtank mit den Merkmalen des unabhängigen Anspruchs 1 gelöst. Vorteilhafte Ausführungsformen und Weiterbildungen sind den Unteransprüchen und der nachfolgenden Beschreibung zu entnehmen.

Es wird ein Fluidtank zur Integration in eine Struktur eines unbemannten Fluggeräts vorgeschlagen, aufweisend eine Hülle mit einer ersten Axialwandung, einer entgegengesetzt angeordneten zweiten Axialwandung, einer Oberseite, einer Unterseite und einem umschlossenen Innenraum, mindestens eine Aufnahmekammer in dem Innenraum zum Lagern von Fluid, und eine an der Unterseite angeordnete Sammelkammer, die mit der mindestens einen Aufnahmekammer in Fluidverbindung steht. Die Sammelkammer weist eine Bodenfläche auf, durch die sich ein Ablauf erstreckt, wobei eine Deckfläche oberhalb der Bodenfläche angeordnet ist und zumindest einen Abschnitt der Sammelkammer überdeckt.

Die äußere Form des Fluidtanks wird durch die Hülle definiert. Es ist vorstellbar, dass der Fluidtank eine längliche Form aufweist. Dies bedeutet, dass er in einer Raumrichtung eine Erstreckung aufweist, die seine Erstreckung in den beiden anderen Raumrichtungen deutlich übersteigt. Dies kann jedoch von der gewünschten Form der Struktur des unbemannten Fluggeräts abhängig gemacht werden, in die der Fluidtank zu integrieren ist. Die Hülle weist zwei einander gegenüberliegend angeordnete Axialwandungen in Form der ersten Axialwandung und der zweiten Axialwandung auf. Diese können auch als Tankendboden oder Tankendkappen bezeichnet werden und stellen jeweils eine axiale Begrenzung des Fluidtanks dar. Der von der Hülle umschlossene Innenraum befindet sich folglich zwischen den beiden Axialwandungen.

Die mindestens eine Aufnahmekammer dient der Bevorratung des Fluids. Sie ist folglich derart dimensioniert, dass die gewünschte bzw. erforderliche Fluidmenge darin aufnehmbar ist. In dem vorangehend genannten Fall der Verwendung des Fluidtanks in Verbindung mit einem regenerativen Brennstoffzellensystem könnte die mindestens eine Aufnahmekammer beispielsweise derart ausgelegt sein, dass ihr Volumen zumindest dem Wasservolumen entspricht, das während einer vorbestimmten Betriebsdauer der Brennstoffzelle entsteht. Diese Betriebsdauer könnte beispielsweise in einem Bereich von 12 bis 48 Stunden liegen.

Die Sammelkammer ist an der Unterseite des Fluidtanks angeordnet, so dass unabhängig von dem Füllstand in dem Fluidtank Fluid über den in der Sammelkammer befindlichen Ablauf entnommen werden kann. Hierzu erstreckt sich der Ablauf durch die Bodenfläche und in die Sammelkammer hinein. Es ist denkbar, dass sich der Ablauf gerade durch die Bodenfläche erstreckt und dann an einer nach innen gewandten Begrenzung der Bodenfläche endet. Der Ablauf könnte sich jedoch auch über eine gewisse Strecke in die Sammelkammer hinein erstrecken, so dass sich ein Einlaufquerschnitt des Ablaufs in einem Abstand von der Bodenfläche befindet und in den Innenraum gerichtet ist.

Die Deckfläche oberhalb der Bodenfläche dient dazu, eine zumindest teilweise geschlossene Sammelkammer auszubilden. Bei Böen, die zu einer entlang der z-Achse des Fluggeräts nach unten gerichteten Beschleunigung des Fluggeräts führen, wird eine vertikal nach oben gerichtete, trägheitsbedingte Bewegung des Fluids in der Sammelkammer durch die Deckfläche weitgehend verhindert. Unabhängig von der Füllmenge in dem restlichen Volumen des Innenraums verbleibt folglich in der Sammelkammer stets eine annähernd gleichbleibende Menge des Fluids und kann zuverlässig durch den Ablauf entnommen werden. Um die Entnahme von Fluid aus der Sammelkammer weiterhin stets gewährleisten zu können, ist ein kontinuierliches Nachströmen von Fluid aus der mindestens einen Aufnahmekammer in die Sammelkammer erforderlich. Dies wird durch die Fluidverbindung zwischen der Sammelkammer und der mindestens einen Aufnahmekammer erreicht. Die Fluidverbindung sollte so dimensioniert sein, dass ein kontinuierliches Nachströmen möglich ist. Strömungsquerschnitte sollten dabei jedoch möglichst klein bleiben. Des Weiteren ist es bevorzugt, die Fluidverbindung in der Nähe der Bodenfläche bzw. der Unterseite des Fluidtanks zu realisieren, so dass bei Lastwechseln aufgrund von vertikal gerichteten Böen das Austreten von Fluid aus der Sammelkammer verhindert wird.

Zusammenfassend ergibt sich durch die diskutierten Maßnahmen ein Fluidtank, der sich sehr gut in die Struktur eines unbemannten Fluggeräts integrieren lässt und verschiedene Vorteile aufweist. Unterschiedliche Lastrichtungen, die auf den Fluidtank und das darin befindliche Fluid wirken, führen nicht zu einer substantiellen Leerung der Sammelkammer, so dass stets eine Entnahme des Fluids ermöglicht wird.

An dieser Stelle sei weiterhin darauf hingewiesen, dass der Fluidtank wie ein Drucktank ausgebildet sein könnte. Die erste Axialwandung und die zweite Axialwandung könnten beispielsweise eine konvexe, nach außen gerichtete Wölbung aufweisen. Zwischen den beiden Axialwandungen könnte sich ein hohlzylindrischer Abschnitt befinden. Das Fluid kann an verschiedenen Stellen und aus unterschiedlichen Richtungen in den Fluidtank eingeleitet werden. Bei der Realisierung als Drucktank findet vor allem eine Druckentnahme des Fluids Berücksichtigung. Beispielsweise könnte Druckluft an den Fluidtank angelegt werden, der zu einem bestimmten Differenzdruck zwischen einer Umgebung des Fluidtanks und dem Innenraum führt. Mit dem Ablauf könnte dann eine Drucksenke bereitgestellt werden, aus der das Fluid ausströmt. Die Entnahme wird dadurch erheblich vereinfacht und es ist keine Pumpe für das Fluid notwendig. Dies könnte sich insbesondere dann anbieten, wenn bereits eine Druckluftquelle in dem Fluggerät vorliegt, beispielsweise in Verbindung mit einem Triebwerk.

Allerdings könnte der Fluidtank lediglich in kurzen Zeitabschnitten druckbeaufschlagt werden. In anderen und überwiegenden Zeitabschnitten könnte der Fluidtank auch drucklos betrieben werden.

Weiterhin sei angemerkt, dass im Sinne der Erfindung der Begriff Fluid insbesondere auf einen Stoff gerichtet ist, der in einem im gespeicherten Zustand innerhalb des Fluidtanks insbesondere einen flüssigen Aggregatzustand aufweist. Besonders bevorzugt ist das Fluid Wasser oder ein Wasser aufweisendes Gemisch. Es ist jedoch nicht ausgeschlossen, dass auch andere Stoffe in diesem Fluidtank gespeichert werden.

Gemäß der Erfindung weisen beide laterale Aufnahmekammern jeweils einen Boden auf, der in der Vertikalen von der jeweiligen Axialwandung bzw. in Richtung der Sammelkammer leicht abfällt.

In einer bevorzugten Ausführungsform ist an einer Oberseite der Sammelkammer mindestens eine Strömungsöffnung angeordnet, die das Austreten von Gasblasen in Richtung der Oberseite des Fluidtanks erlaubt. Das Ansammeln von Gasblasen in der Sammelkammer sollte möglichst unterbunden werden, da ansonsten bei ungünstiger Bewegung des Fluggeräts sich das in der Sammelkammer befindliche Fluid in den von den Gasblasen eingenommenen Raum bewegen könnte. Dies kann durch den Austritt etwaiger Gasblasen durch Strömungsöffnungen aus der Sammelkammer verhindert werden. Die Strömungsöffnungen erlauben jedoch auch ein Durchströmen des Fluids selbst. Es ist daher bevorzugt, dass die Strömungsöffnungen derart dimensioniert sind, dass bei einer entlang der z-Achse nach unten gerichteten Beschleunigung des Fluggeräts das Fluid nur mit einem sehr begrenzten Volumenstrom aus der Sammelkammer in die angrenzenden Bereiche des Innenraums strömt. Die Größe der Strömungsöffnung ist folglich auch an die Viskosität des Fluid anzupassen.

Bevorzugt weist die Sammelkammer mindestens eine Sammelkammerwandung auf, die sich von der Unterseite des Fluidtanks zu der Deckfläche erstreckt und die Sammelkammer definiert, und wobei die mindestens eine Sammelkammerwandung zumindest bereichsweise von einer äußeren Sammelkammerwandung beabstandet ist. Dadurch könnte eine weiter verbesserte Einrichtung zum Vorhalten eines kleinen Volumens an Fluid realisiert werden, das sich sehr gut entnehmen lässt. Die Sammelkammerwandung könnte sich beispielsweise in einem relativ geringen Abstand zu der äußeren Sammelkammerwandung befinden, so dass das Einströmen oder Nachströmen von Fluid oder Luft ermöglicht wird, während das in der Sammelkammer befindliche Restvolumen durch die Deckfläche und die Sammelkammerwandung gehalten wird. Die Strömungsöffnung könnte dann beispielsweise an einem Rand der Deckfläche, an einem Übergang zwischen der Sammelkammerwandung und der Deckfläche, an einer Oberseite der Deckfläche oder an einem oberen Rand der Sammelkammerwandung angeordnet sein.

In einer vorteilhaften Ausführungsform schließt die Sammelkammerwandung einen Sammelkammerspalt mit der äußeren Sammelkammerwandung ein. Der Spalt ist als ein Zwischenraum zu verstehen, der bevorzugt eine konstante oder weitgehend konstante Erstreckung in einer Richtung aufweist. Der Sammelkammerspalt könnte sich ausgehend von einer Mitte der Sammelkammer abhängig von ihrer Form zumindest entlang einer Raumrichtung nach außen erstrecken. Bei einigen Ausführungsformen könnte sich der Sammelkammerspalt auch in Form zweier getrennter Spalte äußern, die in axialer oder lateraler Richtung vor oder hinter bzw. neben der Sammelkammer angeordnet sind. Eine Kombination aus lateralen und axialen Spalten wäre ebenso denkbar. Der Sammelkammerspalt dient zur Herstellung der Fluidverbindung zwischen der Sammelkammer und der mindestens einen Aufnahmekammer.

Es ist vorteilhaft, wenn die Sammelkammer durch eine an der Unterseite angeordnete Öffnung mit der mindestens einen Aufnahmekammer in Fluidverbindung steht. Zum Nachströmen von Fluid in die Sammelkammer ist zumindest an einer Stelle ein offener Durchströmquerschnitt notwendig, der sich bevorzugt im Bereich der Bodenfläche befindet. Dadurch kann verhindert werden, dass bei negativer Beschleunigung in Z-Richtung des Fluggeräts das Fluid über derartige Durchströmquerschnitte aus der Sammelkammer austritt. Die Öffnung könnte beispielsweise als ein Spalt unterhalb einer Sammelkammerwandung realisiert sein. Es könnte sich auch anbieten, eine Sammelkammerwandung mit Öffnungen zu versehen, die an der Unterseite angeordnet sind und sich radial bzw. quer durch die Sammelkammerwandung erstrecken.

Bevorzugt weist die Deckfläche einen radial mittigen Bereich auf, der einen größeren Abstand zu der Bodenfläche aufweist als radial außenliegende Bereiche. Gasblasen könnten dann gezielt zu radial innenliegenden Bereichen geführt werden, um dort auszutreten. Es bietet sich an, dort entsprechende Strömungsöffnungen vorzusehen. Der radial mittige Bereich könnte etwa eine konvex geformte Ausbuchtung aufweisen. Durch einen ausreichend großen Abstand können sich gezielt Gasblasen ansammeln. Das Anordnen der mindestens einen Strömungsöffnung in der Deckfläche erlaubt es den Gasblasen, in den Fluidtank abzuströmen.

Die Deckfläche könnte weiter bevorzugt eine keglige oder rampenförmige Form aufweisen. Die Form kann mit einer mehr oder weniger steilen Steigung ausgeführt werden, um eine verbesserte Führung der Gasblasen zu den vorgesehenen Strömungsöffnungen zu ermöglichen. Es könnte sich allerdings anbieten, eine relativ flache Form zu wählen, um bei negativen Beschleunigungen den entstehenden Druck des Fluids auf die mindestens eine Strömungsöffnung zu verringern.

Es bietet sich an, die Sammelkammer mittig in einer längsaxialen Richtung zwischen der ersten Axialwandung und der zweiten Axialwandung anzuordnen. Der gesamte Fluidtank könnte folglich dazu optimiert sein, in einem Schwerpunktbereich bzw. symmetrisch zu einer den Schwerpunkt umfassenden Achse des Fluggeräts angeordnet zu werden. Das Fluid wird stets nahe des Schwerpunkts entnommen. Die längsaxiale Richtung bezieht sich dabei auf eine Haupterstreckungsachse des Fluidtanks.

Bevorzugt schließt eine erste Aufnahmekammer axial an die erste Axialwandung an, wobei eine zweite Aufnahmekammer axial an die zweite Axialwandung anschließt. Durch zwei Aufnahmekammern kann die Masse des Fluids in dem Innenraum etwas besser verteilt werden. Es kann sich je nach Art des Fluggeräts und der erforderlichen Größe des Innenraums anbieten, eine oder mehrere weitere Aufnahmekammern zu verwenden.

Besonders bevorzugt ist die Sammelkammer zwischen den Axialwandungen symmetrisch angeordnet. Weist der Fluidtank zwei äußere Aufnahmekammern und eine zentrale Aufnahmekammer auf, kann sich die Sammelkammer in axialer Richtung zwischen den beiden äußeren Aufnahmekammern und unterhalb der zentralen Aufnahmekammer befinden.

Die mindestens eine Aufnahmekammer kann einen Boden aufweisen, der zu der Sammelkammer hin in Richtung der Unterseite rampenförmig abfällt. Durch die rampenförmige Gestalt des Bodens kann das in der mindestens einen Aufnahmekammer befindliche Fluid gezielt schwerkraftbedingt zu der Sammelkammer geführt werden. Die rampenförmige Gestalt kann zu der Sammelkammer symmetrisch ausgebildet sein und sich über den Boden des Fluidtanks seitlich zu der Sammelkammer erstrecken.

Der erfindungsgemäße Fluidtank weist ferner mindestens ein quer zu einer Axialrichtung des Fluidtanks verlaufendes Schwallblech auf. Das Schwallblech kann insbesondere ein Schwappen des Fluids dämpfen. Es ist vorstellbar, dass ein Schwallblech mehrere Ausschnitte aufweist, die das Durchtreten des Fluids erlauben. Allerdings wäre auch denkbar, die Schwallbleche bis auf eine zu der Sammelkammer gerichtete Seite vollständig zu schließen und damit eine Unterteilung des Innenraums in zwei oder mehr Kammern zu ermöglichen.

Das mindestens eine Schwallblech kann sich insbesondere vertikal oberhalb oder seitlich der Sammelkammer anschließen und dabei gleichzeitig als Versteifung der Hülle fungieren.

Bevorzugt ist der Fluidtank als Wassertank ausgebildet. Dies bedeutet, dass die Flächen des Fluidtanks, die zu dem Innenraum gewandt sind, wasserfest und bevorzugt korrosionsfest ausgeführt sind. Die Werkstoffauswahl des Fluidtanks ist für das Speichern von Wasser oder von Fluiden mit ähnlichen Eigenschaften, zum Beispiel Gemischen, die Wasser aufweisen, angepasst. Die Strömungsöffnung zum Austreten der Gasblasen ist möglichst klein zu dimensionieren, um das Austreten von Wasser aus der Sammelkammer in den Rest des Innenraums so gering wie möglich zu halten, jedoch ohne das Austreten von Gasblasen zu verhindern. Es kann sich anbieten, die mindestens eine Strömungsöffnung mit einer Öffnungsweite von wenigen Millimetern auszugestalten. Sämtliche weiteren Öffnungen, Strömungsquerschnitte und dergleichen sind auf die Viskosität des Wassers anzupassen, um ein kontinuierliches Nachströmen von Wasser zwischen einzelnen Bereichen des Innenraums nicht zu verhindern oder übermäßig einzuschränken.

Die Erfindung betrifft ferner ein unbemanntes Fluggerät, aufweisend mindestens eine Tragfläche und mindestens einen vorangehend ausgeführten und in das Fluggerät integrierten Fluidtank. Bei einem unbemannten Fluggerät, welches insbesondere für große Höhen vorgesehen ist, könnte etwa mindestens ein länglicher Rumpf vorgesehen sein. Es sind jedoch auch Nurflügel-Fluggeräte oder Fluggeräte mit mehreren Rümpfen denkbar. Insbesondere bei der vorangehend erläuterten Ausführung eines solargestützten Fluggeräts für einen längeren Aufenthalt in größeren Flughöhen könnte sich eine schlanke Bauform mit einem länglichen Rumpf anbieten.

Dabei ist der Fluidtank insbesondere lasttragend ausgebildet. Zur Minimierung des Gewichts des Fluggeräts könnte der erfindungsgemäße Fluidtank folglich lasttragend ausgebildet sein. Die Anordnung der einzelnen, in dem Innenraum ausgebildeten Kammern sowie die dazwischen befindlichen Wandungen können zur Übernahme von lasttragenden Funktionen optimiert werden. Beispielsweise könnte ein Schwallblech eingesetzt werden, das eine Versteifung des Fluidtanks in einer Richtung ermöglicht. Durch Verwendung mehrerer Schwallbleche, die parallel und/oder quer zueinander angeordnet sind, könnte eine Art räumliche Fachwerkstruktur erreicht werden, die dem Fluidtank eine besonders hohe Steifigkeit bzw. Festigkeit verleiht. Damit ließe sich der den Fluidtank aufnehmende Bereich des Fluggeräts durch den Fluidtank ausbilden oder sich auf eine nicht lasttragende Beplankung oder dergleichen beschränken.

Schließlich könnte das Fluggerät mindestens eine regenerative Brennstoffzelle aufweisen, die mit dem Fluidtank in Fluidverbindung steht. Das beim Betrieb der regenerativen Brennstoffzelle entstehende Wasser könnte dann dem Innenraum des Fluidtanks zugeführt werden. Das Fluggerät umfasst bevorzugt weiterhin einen Elektrolyseur, der mit dem Ablauf in Fluidverbindung bringbar ist, um Wasser aus dem Fluidtank zu entnehmen und durch ein Elektrolyseverfahren in Wasserstoff und Sauerstoff zu zerlegen. Zumindest der Wasserstoff könnte dann entsprechend gespeichert werden, um dadurch die Brennstoffzelle betreiben zu können.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren.

In den Figuren stehen weiterhin gleiche Bezugszeichen für gleiche oder ähnliche Objekte.
Fig. 1a und 1b zeigen einen erfindungsgemäßen Fluidtank in mehreren unterschiedlichen Ansichten.
Fig. 2a und 2b zeigen ein Detail einer Sammelkammer des Fluidtanks.
Fig. 3 zeigt ein Detail der Sammelkammer in einer Schnittdarstellung.
Fig. 4 zeigt schematisch ein unbemanntes Fluggerät.

### DETAILLIERTE DARSTELLUNG EXEMPLARISCHER AUSFÜHRUNGSFORMEN

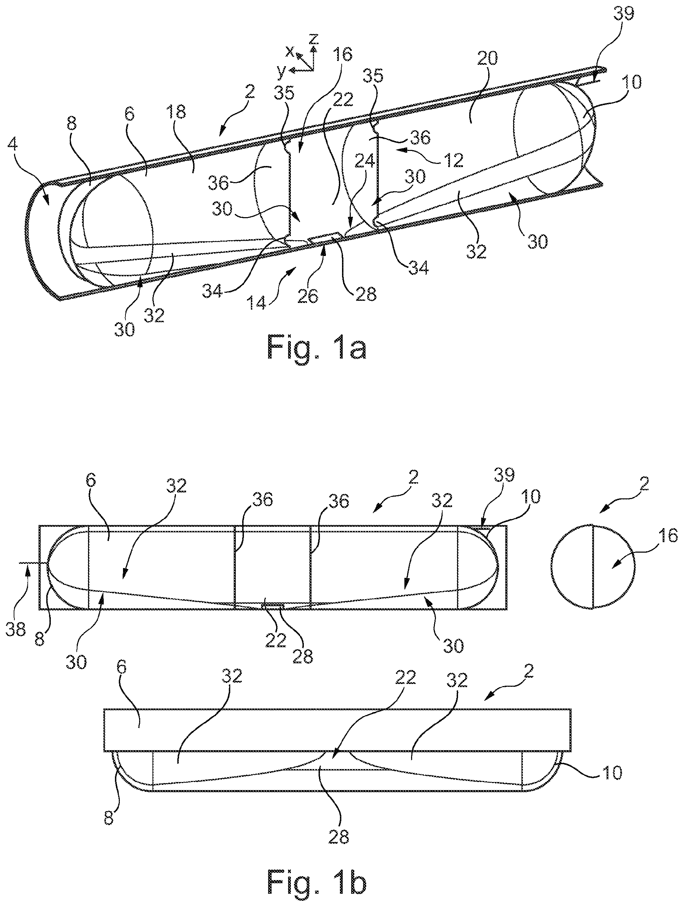

Fig. 1a zeigt einen Fluidtank 2, der in eine Struktur 4 eines unbemannten Fluggeräts integriert ist. Beispielhaft wird die Struktur 4 durch eine Beplankung bzw. eine Rumpfhaut oder Holmhaut angedeutet. Die Erfindung ist nicht hierauf beschränkt. Vielmehr kann es sich anbieten, den Fluidtank insbesondere in eine schlanke Struktur eines Fluggeräts zu integrieren.

Der Fluidtank 2 weist eine Hülle 6 mit einer ersten Axialwandung 8, einer entgegengesetzt angeordneten zweiten Axialwandung 10, einer Oberseite 12, einer Unterseite 14 und einem umschlossenen Innenraum 16 auf. Der Innenraum 16 weist eine erste laterale Aufnahmekammer 18 auf, die axial an die erste Axialwandung 8 anschließt. Eine zweite laterale Aufnahmekammer 20 schließt an die zweite Axialwandung 10 an. Beide Aufnahmekammern 18 und 20 sind dazu vorgesehen, Fluid in dem Innenraum 16 zu lagern. Sie bilden folglich einzelne Tanksegmente aus. Während die Struktur 4 aus einem kohlefaserverstärkten Kunststoff hergestellt sein könnte, könnte die Hülle 6 aus einer Aluminiumlegierung bestehen.

Mittig dazu befindet sich eine zentrale Aufnahmekammer 22, die mit beiden lateralen Aufnahmekammern 18 und 20 in Fluidverbindung steht. Die zentrale Aufnahmekammer 22 weist eine Bodenfläche 24 mit einer Sammelkammer 28 auf, in die sich ein Ablauf 26 erstreckt.

Beide lateralen Aufnahmekammern 18 und 20 weisen jeweils einen Boden 32 auf, der in der Vertikalen (z-Richtung) von der jeweiligen Axialwandung 8 bzw. 10 in Richtung der Sammelkammer 28 leicht abfällt. Die Aufnahmekammern 18, 20 und 22 können allerdings auch eine konische Ausformung ohne Boden aufweisen. Damit kann ein Fluid, insbesondere Wasser, schwerkraftbedingt von der jeweiligen lateralen Aufnahmekammer 18 bzw. 20 stets zu der Sammelkammer 28 fließen. Zur Schaffung einer Fluidverbindung sind untere Einströmöffnungen 34 in Schwallblechen 36 angeordnet. Sie schließen dort direkt an den jeweiligen Boden 32 an. Die Schwallbleche 36 können sich von dem jeweiligen Boden 32 im Wesentlichen vertikal nach oben zu der Oberseite 12 des Fluidtanks 2 hin erstrecken. Neben der Funktion des Verhinderns eines übermäßigen Fluidbewegung können die Schwallbleche 36 zudem zu einer Versteifung und insbesondere zur Erhöhung der Biege- und Torsionssteifigkeit des Fluidtanks 2 beitragen. An ihrer Oberseite können sie obere Einströmöffnungen 35 aufweisen, die beispielsweise zum Durchtreten von Luft oder anderen gasförmigen Fluiden dienen. Unterhalb der Aufnahmekammern 18, 20 und 22 ist eine thermische Isolierung 30 vorgesehen, welche beispielsweise als Schaumstoff, insbesondere als geschlossenporiger Schaumstoff, oder als Aerogel ausgeführt ist.

In Fig. 1b wird eine Drei-Seiten-Ansicht des Fluidtanks 2 präsentiert. Hier wird besonders die längliche, röhrenförmige Gestalt des Fluidtanks 2 deutlich. Die Axialwandungen 8 und 10 sind konvex stark nach außen gewölbt und können den Fluidtank 2 auch als Drucktank ausbilden. An relativ beliebigen Stellen kann Fluid in den Fluidtank 2 eingeleitet werden. Beispielhaft werden ein erster Fluideinlass 38 und ein zweiter Fluideinlass 39 gezeigt. Der erste Fluideinlass 38 könnte zum Einleiten von Wasser dienen. Es ist denkbar, dass durch den zweiten Fluideinlass 39 zumindest zeitweise ein druckbeaufschlagtes Gas, beispielsweise Sauerstoff, Wasserstoff oder Luft eingeleitet wird, so dass durch einen in dem Fluidtank 2 herrschenden Überdruck eine gezielte Abgabe von Fluid aus dem Ablauf 26 erfolgen kann. Dort könnte sich beispielsweise ein Ventil (nicht gezeigt) anschließen, welches zur Entnahme von Fluid geöffnet wird und nach Entnahme geschlossen wird. Fluid, insbesondere Wasser, könnte dann beispielsweise einem Elektrolyseur zugeführt werden. Es kann sich anbieten, während eines überwiegenden Zeitabschnitts den Fluidtank 2 nicht mit einem Druck zu beaufschlagen.

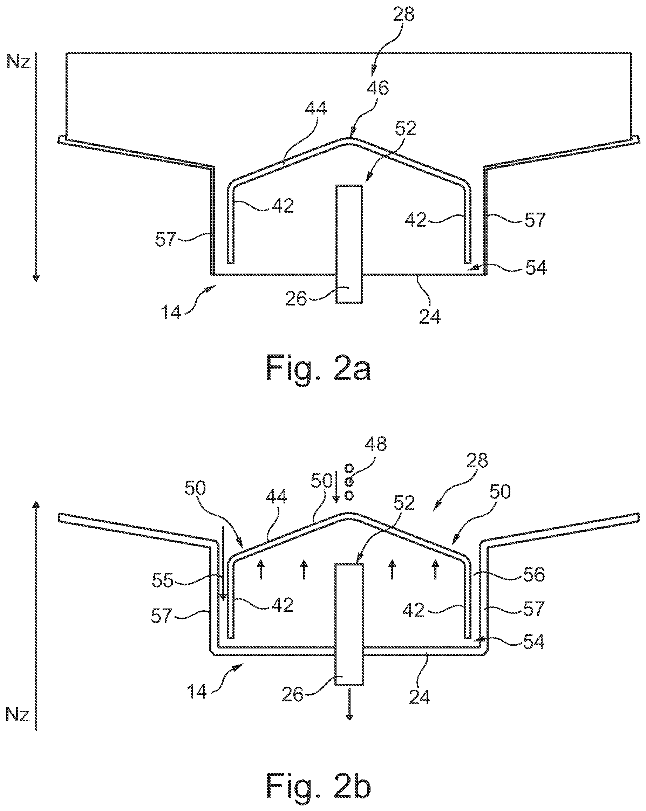

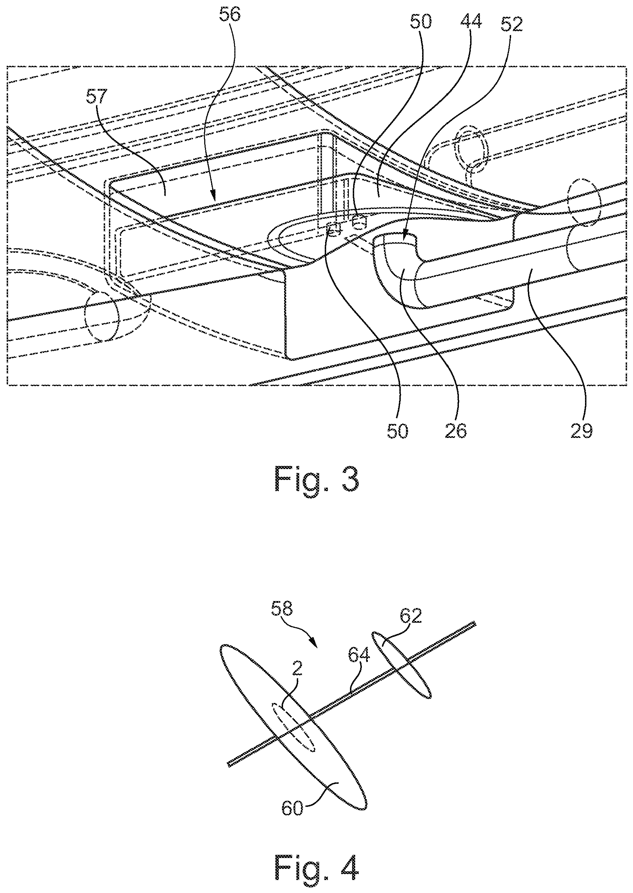

In den Figuren 2a, 2b und 3 wird die Sammelkammer 28 in Schnittdarstellungen gezeigt. Die Sammelkammer 28 weist zwei laterale Sammelkammerwandungen 42 auf, die sich von der Unterseite des Fluidtanks 2 zu einer Deckfläche 44 hin erstrecken und dabei die Sammelkammer 28 definieren. Die Deckfläche 44 ist hier mit einer abgerundeten, flach kegligen oder rampenförmigen und beispielhaft konvex nach oben gewölbten Form ausgestattet, so dass sie in einem radial mittigen Bereich 46 einen höheren Abstand zu der Bodenfläche 24 aufweist, als in radial außen liegenden Bereichen.

An dem radial mittigen Bereich 46 sind Strömungsöffnungen 50 angeordnet, die das Ausleiten von Gasblasen erlauben. Dies wird durch die Form der Deckfläche 44 unterstützt, da in einem stationären Flugzustand des Fluggeräts Gasblasen in Richtung der Deckfläche 44 aufsteigen können und dann entlang der Steigung in den mittigen Bereich 46 zu den Strömungsöffnungen 50 hin wandern. Der Ablauf 26 weist einen Einlaufquerschnitt 52 auf, der deutlich von der Bodenfläche 24 beabstandet ist und unter dem radial mittigen Bereich 46 endet. Durch den Ablauf 26 kann Fluid aus der Sammelkammer 28 entnommen werden. Im stationären Flug ist davon auszugehen, dass die Sammelkammer 28 stets mit dem zu entnehmenden Fluid gefüllt ist.

Anhand von Fig. 2b wird dargestellt, wie bei einer vertikal nach unten gerichteten Beschleunigung des Fluggeräts, angedeutet durch das vertikal nach oben gerichtete Lastvielfache N_{z}, Fluid in der Sammelkammer 28 trägheitsbedingt in Richtung der Deckfläche 44 gedrängt wird. Durch die Deckfläche 44 kann das Fluid die Sammelkammer 28 lediglich über die Strömungsöffnungen 50 verlassen. Bei ausreichend kleiner Dimensionierung der Strömungsöffnungen 50 kann das Fluid lediglich in Form von Tropfen 48 austreten. Zum Ausgleich des Drucks in der Sammelkammer 28 kann Luft 55 durch einen die Sammelkammer 28 umgebenden Sammelkammerspalt 56 eintreten. Gleichzeitig wird in einem stationären Betrieb jedoch das Durchtreten von Gasblasen nicht verhindert. Sowohl in dem stationären Zustand in Fig. 2a als auch in dem Böenlastfall oder Sinkflug in Fig. 2b steht der Einlaufquerschnitt 52 vollständig mit dem Fluid in Verbindung, so dass in beiden Fällen eine zuverlässige Fluidentnahme möglich ist.

Des Weiteren wird hier dargestellt, dass Durchströmöffnungen 34 aus Fig. 1a durch einen Spalt 54 oberhalb der Bodenfläche 24 und unterhalb der Sammelkammerwandungen 42 in Verbindung mit dem Sammelkammerspalt 56 zwischen den Sammelkammerwandungen 42 und äußeren Sammelkammerwandungen 57 in Fluidverbindung stehen. Bei einer konischen Ausführung der Aufnahmekammern 18 und 20 könnten die Sammelkammerwandungen 57 auch als Außenwand des Fluidtanks 2 ausgeführt sein. Im stationären Fall kann durch einen hierdurch gebildeten Strömungspfad Fluid in die Sammelkammer 28 nachströmen. In dem in Fig. 2b gezeigten Lastfall strömt Luft oder ein anderes Gas durch diesen Strömungspfad in die Sammelkammer 28 nach. Aufgrund der möglichst kleine Abmessungen aufweisend dimensionierten Öffnungen 50 und des weit von der Bodenfläche 24 beabstandeten Einlaufquerschnitts 52 würde es theoretisch eine beträchtliche Zeit dauern, bis das Fluid verdrängt ist und die Luft den Einlaufquerschnitt 52 überhaupt erreichen würde. Bei ausreichend dimensionierter Größe der Sammelkammer 28 kann folglich sichergestellt werden, dass in keinem anzunehmenden Lastfall eine derartige Vertikalbeschleunigung so lange anhält, dass dieser Zustand eintreten könnte. Das maximale Volumen der Sammelkammer 28 wird durch die Oberkante des Spalts 54 definiert.

Wie in Fig. 3 ersichtlich kann der Ablauf 26 mit einer Entnahmeleitung 29 verbunden sein, die sich unter dem Fluidtank 2 erstreckt. Je nach Ausführung kann sich die Entnahmeleitung 29 über die Axialwandung 8 oder 10 hinaus erstrecken oder im Verlauf in eine andere Richtung geknickt sein.

Schließlich zeigt Fig. 4 sehr schematisch ein unbemanntes Fluggerät 58, in das ein Fluidtank 2 integriert ist. Diese Darstellung ist lediglich exemplarisch zu verstehen und soll den Gegenstand nicht auf ein derartiges Fluggerät beschränken. Beispielhaft ist der Fluidtank 2 quer an, in oder unterhalb von Tragflächen 60 angeordnet. Der Fluidtank 2 könnte alternativ auch in einem Leitwerk 62 angeordnet sein. Weiter alternativ könnte der Fluidtank 2 auch in einem Rumpf 64 angeordnet sein. Es sind weitere Ausführungen von Fluggeräten ohne Rumpf, mit mehreren Rümpfen und mit oder ohne separate Leitwerk denkbar.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### BEZUGSZEICHEN

- 2: Fluidtank
- 4: Struktur
- 6: Hülle
- 8: erste Axialwandung
- 10: zweite Axialwandung
- 12: Oberseite
- 14: Unterseite
- 16: Innenraum
- 18: erste Aufnahmekammer
- 20: zweite Aufnahmekammer
- 22: zentrale Aufnahmekammer
- 24: Bodenfläche
- 26: Ablauf
- 28: Sammelkammer
- 30: thermische Isolierung
- 32: Boden
- 34: untere Einströmöffnung
- 35: obere Einströmöffnung
- 36: Schwallblech
- 38: erster Fluideinlass
- 40: zweiter Fluideinlass
- 42: Sammelkammerwandung
- 44: Deckfläche
- 46: radial mittiger Bereich
- 48: Tropfen
- 50: Strömungsöffnung
- 52: Einlaufquerschnitt
- 54: Spalt / radiale Öffnung
- 55: Luft
- 56: Sammelkammerspalt
- 57: äußere Sammelkammerwandung
- 58: Fluggerät
- 60: Tragfläche
- 62: Leitwerk
- 64: Rumpf

## Patentansprüche

1. Fluidtank (2) zur Integration in eine Struktur eines unbemannten Fluggeräts (58), aufweisend:
- eine Hülle (6) mit einer ersten Axialwandung (8), einer entgegengesetzt angeordneten zweiten Axialwandung (10), einer Oberseite (12), einer Unterseite (14) und einem umschlossenen Innenraum (16),
- mindestens eine Aufnahmekammer (18, 20, 22) in dem Innenraum (16) zum Lagern von Fluid, und
- eine an der Unterseite (14) angeordnete Sammelkammer (28), die mit der mindestens einen Aufnahmekammer (18, 20, 22) in Fluidverbindung steht,
wobei die Sammelkammer (28) eine Bodenfläche (24) aufweist, durch die sich ein Ablauf (26) erstreckt,
wobei eine Deckfläche (44) oberhalb der Bodenfläche (24) angeordnet ist und zumindest einen Abschnitt der Sammelkammer (28) überdeckt,
wobei eine erste Aufnahmekammer (18) axial an die erste Axialwandung (8) anschließt und wobei eine zweite Aufnahmekammer (20) axial an die zweite Axialwandung (10) anschließt, und
wobei die Sammelkammer (28) mittig in einer längsaxialen Richtung zwischen der ersten Axialwandung (8) und der zweiten Axialwandung (10) und zwischen der ersten Aufnahmekammer (18) und der zweiten Aufnahmekammer (20) und unterhalb einer zentralen Aufnahmekammer (22) angeordnet ist,
ferner aufweisend mindestens ein quer zu einer Axialrichtung des Fluidtanks (2) verlaufendes Schwallblech (36),
wobei beide laterale Aufnahmekammern (18) und (20) jeweils einen Boden aufweisen, der in der Vertikalen von der jeweiligen Axialwandung (8) bzw. (10) in Richtung der Sammelkammer leicht abfällt.

2. Fluidtank (2) nach Anspruch 1,
wobei an einer Oberseite der Sammelkammer (28) mindestens eine Strömungsöffnung (50) angeordnet ist, die das Austreten von Gasblasen in Richtung der Oberseite des Fluidtanks (2) erlaubt.

3. Fluidtank (2) nach Anspruch 1 oder 2,
wobei die Sammelkammer (28) mindestens eine Sammelkammerwandung (42) aufweist, die sich von der Unterseite (14) des Fluidtanks (2) zu der Deckfläche (44) erstreckt und die Sammelkammer (28) definiert, und
wobei die mindestens eine Sammelkammerwandung (42) zumindest bereichsweise von einer äußeren Sammelkammerwandung (57) beabstandet ist.

4. Fluidtank (2) nach Anspruch 3,
wobei die Sammelkammerwandung (42) einen Sammelkammerspalt (56) mit der äußeren Sammelkammerwandung (57) einschließt.

5. Fluidtank (2) nach einem der vorhergehenden Ansprüche 3 oder 4,
wobei die Sammelkammer (28) durch eine an der Unterseite (14) angeordnete Öffnung (54) mit der mindestens einen Aufnahmekammer (18, 20, 22) in Fluidverbindung steht.

6. Fluidtank (2) nach einem der vorhergehenden Ansprüche,
wobei die Deckfläche (44) einen radial mittigen Bereich (46) aufweist, der einen größeren Abstand zu der Bodenfläche (24) aufweist als radial außenliegende Bereiche.

7. Fluidtank (2) nach einem der vorhergehenden Ansprüche,
wobei die mindestens eine Aufnahmekammer (18, 20, 22) einen Boden (32) aufweist, der zu der Sammelkammer (28) hin in Richtung der Unterseite (14) rampenförmig abfällt.

8. Fluidtank (2) nach Anspruch 1,
wobei das mindestens eine Schwallblech (36) vertikal oberhalb oder seitlich der Sammelkammer (28) angeordnet ist.

9. Fluidtank (2) nach einem der vorhergehenden Ansprüche,
wobei der Fluidtank (2) als Wassertank ausgebildet ist.

10. Unbemanntes Fluggerät (58), aufweisend mindestens eine Tragfläche (60) und mindestens einen in das Fluggerät (58) integrierten Fluidtank (2) nach einem der vorhergehenden Ansprüche.

11. Fluggerät nach Anspruch 10,
wobei der Fluidtank (2) lasttragend ausgebildet ist.

12. Fluggerät nach Anspruch 10 oder 11,
ferner aufweisend mindestens eine regenerative Brennstoffzelle, die mit dem Fluidtank (2) in Fluidverbindung steht, und
einen Elektrolyseur, der mit dem Ablauf in Fluidverbindung bringbar ist, um Wasser aus dem Fluidtank (2) zu entnehmen und durch ein Elektrolyseverfahren in Wasserstoff und Sauerstoff zu zerlegen.

## Claims

1. Fluid tank (2) for integration into a structure of an unmanned aircraft (58), comprising:
- a shell (6) having a first axial wall (8), an oppositely arranged second axial wall (10), an upper side (12), a lower side (14) and an enclosed interior (16),
- at least one receiving chamber (18, 20, 22) in the interior (16) for storing fluid, and
- a collecting chamber (28) arranged at the lower side (14), which is in fluid communication with the at least one receiving chamber (18, 20, 22),
wherein the collecting chamber (28) has a bottom surface (24) through which an outlet (26) extends,
wherein a top surface (44) is arranged above the bottom surface (24) and covers at least a section of the collecting chamber (28),
wherein a first receiving chamber (18) axially adjoins the first axial wall (8) and wherein a second receiving chamber (20) axially adjoins the second axial wall (10), and
wherein the collecting chamber (28) is arranged centrally in a longitudinal axial direction between the first axial wall (8) and the second axial wall (10) and between the first receiving chamber (18) and the second receiving chamber (20) and below a central receiving chamber (22),
further comprising at least one baffle plate (36) extending transversely to an axial direction of the fluid tank (2),
wherein both lateral receiving chambers (18) and (20) each have a floor which slopes slightly in the vertical direction from the respective axial wall (8) or (10) towards the collecting chamber.

2. Fluid tank (2) according to claim 1,
wherein at least one flow opening (50) is arranged at an upper side of the collecting chamber (28), which allows gas bubbles to escape towards the upper side of the fluid tank (2).

3. Fluid tank (2) according to claim 1 or 2,
wherein the collecting chamber (28) has at least one collecting chamber wall (42) which extends from the lower side (14) of the fluid tank (2) to the top surface (44) and defines the collecting chamber (28), and
wherein the at least one collecting chamber wall (42) is spaced, at least in regions, from an outer collecting chamber wall (57).

4. Fluid tank (2) according to claim 3,
wherein the collecting chamber wall (42) encloses a collecting chamber gap (56) with the outer collecting chamber wall (57).

5. Fluid tank (2) according to any one of the preceding claims 3 or 4,
wherein the collecting chamber (28) is in fluid communication with the at least one receiving chamber (18, 20, 22) through an opening (54) arranged at the lower side (14).

6. Fluid tank (2) according to any one of the preceding claims,
wherein the top surface (44) has a radially central region (46) which has a greater distance from the bottom surface (24) than radially outer regions.

7. Fluid tank (2) according to any one of the preceding claims,
wherein the at least one receiving chamber (18, 20, 22) has a floor (32) which slopes down in a ramp-like manner towards the collecting chamber (28) in the direction of the lower side (14).

8. Fluid tank (2) according to claim 1,
wherein the at least one baffle plate (36) is arranged vertically above or to the side of the collecting chamber (28).

9. Fluid tank (2) according to any one of the preceding claims,
wherein the fluid tank (2) is configured as a water tank.

10. Unmanned aircraft (58), comprising at least one wing (60) and at least one fluid tank (2) according to any one of the preceding claims integrated into the aircraft (58).

11. Aircraft according to claim 10,
wherein the fluid tank (2) is configured to be load-bearing.

12. Aircraft according to claim 10 or 11, further comprising at least one regenerative fuel cell which is in fluid communication with the fluid tank (2), and
an electrolyzer which can be brought into fluid communication with the outlet in order to take water from the fluid tank (2) and decompose it into hydrogen and oxygen by an electrolysis process.

## Revendications

1. Réservoir de fluide (2) pour l'intégration dans une structure d'un aéronef sans pilote (58), comprenant :
- une enveloppe (6) avec une première paroi axiale (8), une seconde paroi axiale (10) disposée à l'opposé, une face supérieure (12), une face inférieure (14) et
- un espace intérieur (16) clos, au moins une chambre de réception (18, 20, 22) dans l'espace intérieur (16) pour le stockage de fluide, et
- une chambre collectrice (28) disposée sur la face inférieure (14), laquelle est en communication fluidique avec l'au moins une chambre de réception (18, 20, 22),
dans lequel la chambre collectrice (28) présente une surface de fond (24) à travers laquelle s'étend un conduit d'évacuation (26),
dans lequel une surface de recouvrement (44) est disposée au-dessus de la surface de fond (24) et recouvre au moins une section de la chambre collectrice (28),
dans lequel une première chambre de réception (18) se raccorde axialement à la première paroi axiale (8) et dans lequel une seconde chambre de réception (20) se raccorde axialement à la seconde paroi axiale (10), et
dans lequel la chambre collectrice (28) est disposée de manière centrale dans une direction longitudinale axiale entre la première paroi axiale (8) et la seconde paroi axiale (10) et entre la première chambre de réception (18) et la seconde chambre de réception (20) et au-dessous d'une chambre de réception centrale (22),
comprenant en outre au moins une chicane (36) s'étendant transversalement à une direction axiale du réservoir de fluide (2),
dans lequel les deux chambres de réception latérales (18) et (20) présentent chacune un fond qui s'abaisse légèrement dans la verticale depuis la paroi axiale (8) ou (10) respective en direction de la chambre collectrice.

2. Réservoir de fluide (2) selon la revendication 1,
dans lequel au moins une ouverture d'écoulement (50) est disposée sur une face supérieure de la chambre collectrice (28), laquelle permet l'échappement de bulles de gaz en direction de la face supérieure du réservoir de fluide (2).

3. Réservoir de fluide (2) selon la revendication 1 ou 2,
dans lequel la chambre collectrice (28) présente au moins une paroi de chambre collectrice (42) qui s'étend depuis la face inférieure (14) du réservoir de fluide (2) jusqu'à la surface de recouvrement (44) et définit la chambre collectrice (28), et
dans lequel l'au moins une paroi de chambre collectrice (42) est espacée, au moins par zones, d'une paroi de chambre collectrice extérieure (57).

4. Réservoir de fluide (2) selon la revendication 3,
dans lequel la paroi de chambre collectrice (42) délimite une fente de chambre collectrice (56) avec la paroi de chambre collectrice extérieure (57).

5. Réservoir de fluide (2) selon l'une des revendications précédentes 3 ou 4,
dans lequel la chambre collectrice (28) est en communication fluidique avec l'au moins une chambre de réception (18, 20, 22) par une ouverture (54) disposée sur la face inférieure (14).

6. Réservoir de fluide (2) selon l'une des revendications précédentes,
dans lequel la surface de recouvrement (44) présente une zone radialement centrale (46) qui présente une distance par rapport à la surface de fond (24) plus grande que celle de zones radialement extérieures.

7. Réservoir de fluide (2) selon l'une des revendications précédentes,
dans lequel l'au moins une chambre de réception (18, 20, 22) présente un fond (32) qui s'abaisse en forme de rampe vers la chambre collectrice (28) en direction de la face inférieure (14).

8. Réservoir de fluide (2) selon la revendication 1,
dans lequel l'au moins une chicane (36) est disposée verticalement au-dessus ou latéralement par rapport à la chambre collectrice (28).

9. Réservoir de fluide (2) selon l'une des revendications précédentes,
dans lequel le réservoir de fluide (2) est réalisé sous la forme d'un réservoir d'eau.

10. Aéronef sans pilote (58), comprenant au moins une aile (60) et au moins un réservoir de fluide (2) selon l'une des revendications précédentes intégré dans l'aéronef (58).

11. Aéronef selon la revendication 10,
dans lequel le réservoir de fluide (2) est réalisé de manière à porter des charges.

12. Aéronef selon la revendication 10 ou 11,
comprenant en outre au moins une pile à combustible régénératrice qui est en communication fluidique avec le réservoir de fluide (2), et
un électrolyseur qui peut être mis en communication fluidique avec le conduit d'évacuation afin de prélever de l'eau du réservoir de fluide (2) et de la décomposer en hydrogène et en oxygène par un procédé d'électrolyse.
